# EUROPEAN PATENT SPECIFICATION

(11) **EP 4 080 357 B1**
(45) Date of publication and mention of the grant of the patent: **26.08.2026**
(21) Application number: 20901953.8
(22) Date of filing: 10.12.2020
(51) Int. Cl.: G06F 9/455, G06F 9/50

(54) **VIRTUAL MACHINE NUMA NODE SCHEDULING METHOD AND APPARATUS, AND DEVICE AND MEDIUM**
NUMA-KNOTENPLANUNGSVERFAHREN UND -GERÄT FÜR VIRTUELLE MASCHINE, UND VORRICHTUNG UND MEDIUM
PROCÉDÉ ET APPAREIL DE PLANIFICATION DE NOEUD NUMA DE MACHINE VIRTUELLE, AINSI QUE DISPOSITIF ET SUPPORT

(30) Priority: 18.12.2019 CN 201911312243
(43) Date of publication of application: 26.10.2022
(73) Proprietor: Sangfor Technologies Inc., Shenzhen, Guangdong 518055 (CN)
(72) Inventor: LIU, Fei, Shenzhen, Guangdong 518055 (CN); ZHOU, Xu, Shenzhen, Guangdong 518055 (CN); LIN, Zhanglong, Shenzhen, Guangdong 518055 (CN); CHEN, Lie, Shenzhen, Guangdong 518055 (CN)
(74) Representative: Müller Schupfner & Partner Patent- und Rechtsanwaltspartnerschaft mbB (Muc)
(86) International application number: PCT/CN2020/135170
(87) International publication number: WO 2021/121115

(56) References cited:
- CN-A- 101 488 098
- CN-A- 101 593 134
- CN-A- 109 471 702
- CN-A- 111 078 363
- ALI QASIM ET AL: "Power Aware NUMA Scheduler in VMware's ESXi Hypervisor", 2015 IEEE INTERNATIONAL SYMPOSIUM ON WORKLOAD CHARACTERIZATION, IEEE, 4 October 2015 (2015-10-04), pages 193 - 202, XP032804837, DOI: 10.1109/IISWC.2015.30
- V M WARE: "Resource Management Guide", 14 November 2008 (2008-11-14), XP055433104, Retrieved from the Internet <URL:https://www.aberdeeninc.com/abcatg/docs-vmware/vi3_35_25_u2_resource_mgmt.pdf> [retrieved on 20171207]
- WU SONG ET AL: "vProbe: Scheduling Virtual Machines on NUMA Systems", 2016 IEEE INTERNATIONAL CONFERENCE ON CLUSTER COMPUTING (CLUSTER), IEEE, 12 September 2016 (2016-09-12), pages 70 - 79, XP033018860, DOI: 10.1109/CLUSTER.2016.60
- TIMOTHY WOOD ET AL: "Black-box and Gray-box Strategies for Virtual Machine Migration", USENIX, USENIX, THE ADVANCED COMPUTING SYSTEMS ASSOCIATION, 11 April 2007 (2007-04-11), pages 1 - 14, XP061009190
- VMWARE: "Performance Best Practices for VMware vSphere 5.1", 21 October 2012 (2012-10-21), XP055272218, Retrieved from the Internet <URL:https://web.archive.org/web/20121021054231/http://www.vmware.com/pdf/Perf_Best_Practices_vSphere5.1.pdf> [retrieved on 20160512]

## Description

### FIELD

The present disclosure relates to the technical field of virtual machines, and in particular to a method and apparatus for dispatching NUMA nodes for virtual machines, an electronic device, and computer-readable storage medium.

### BACKGROUND

A virtual machine (VM) refers to a complete computer system, simulated by software, with complete functions of a hardware system and running in a completely isolated environment. The virtual machine is created and used based on hardware of a physical machine, and physical CPU and memory resources of the physical machine is required to be used as VCPU and memory of the virtual machine. Therefore, the dispatching of hardware resources by the virtual machine is an important issue. However, conventional methods for dispatching the hardware resources for the virtual machines generally have deficiencies and cannot meet increasing demands of users. In view of this, it is an urgent need for those skilled in the art to provide a solution to the above technical problems. ALI QASIM ET AL "Power Aware NUMA Scheduler in VMware's ESXi Hypervisor" (2015 IEEE INTERNATIONAL SYMPOSIUM ON WORKLOAD CHARACTERIZATION, IEEE, 4 October 2015, pages 193-202, XP032804837, DO 1: 10.1109/1 ISWC.2015.30) proposes to optimize the placement of virtual machines on NUMA enabled systems, such that the overall energy consumption of the virtualized system is reduced with minimal impact on VM performance. The proposed heuristics exploit a relatively new CPU hardware feature, called independent package C-states. This paper presents the first work on making a NUMA scheduler power-aware by exploiting independent package C-states.

### SUMMARY

The invention is set out in the appended set of claims. The purpose of the present disclosure is to provide a method for dispatching NUMA nodes for virtual machines, an apparatus, an electronic device and a computer-readable storage medium, to flexibly and reasonably dispatch resources according to application requirements of different virtual machines, so as to meet the demands of users.

In order to solve the above technical problems, in a first aspect, a method for dispatching NUMA nodes for virtual machines is disclosed according to the present disclosure. The method includes:
determining, for each of multiple virtual machines, a corresponding number of NUMA nodes;
initially allocating the corresponding numbers of NUMA nodes to the multiple virtual machines respectively;
monitoring a CPU load of each of the NUMA nodes in a NUMA cluster; and
adjusting dispatch of the NUMA nodes to balance the CPU loads in a case that the CPU load of a NUMA node is overcommitted; where a CPU load overcommitting threshold of a NUMA node where a preset virtual machine dominating in resource invocation resides is lower than the CPU load overcommitting threshold of a NUMA node where a virtual machine other than the preset virtual machine resides.

Optionally, determining, for each of multiple virtual machines, a corresponding number of NUMA nodes includes:
determining a number of NUMA nodes corresponding to each of multiple virtual machines based on a relationship between a preset number of VCPUs of the virtual machine and a number of CPU cores of a single node.

Optionally, determining a number of NUMA nodes corresponding to each of multiple virtual machines, based on a relationship between a preset number of VCPUs of the virtual machine and a number of CPU cores of a single node includes:
judging whether the preset number of VCPUs is less than the total number of CPU cores of the NUMA cluster, where the total number of CPU cores is a product of the number of CPU cores of a single node and the total number of nodes;
determining a number, which is obtained by rounding up a ratio of the preset number of VCPUs to the number of CPU cores of a single node, as the number of NUMA nodes corresponding to the virtual machine, in a case that the preset number of VCPUs is less than the total number of CPU cores; and
determining the total number of nodes as the number of NUMA nodes corresponding to the virtual machine, in a case that the preset number of VCPUs is not less than the total number of CPU cores.

Optionally, initially allocating the corresponding number of NUMA nodes to the multiple virtual machines respectively includes:
selecting the corresponding number of NUMA nodes for each of the multiple the virtual machines; and
configuring CPUs and local memories of the corresponding number of NUMA nodes to be invoked by a corresponding virtual machine.

Optionally, selecting the corresponding number of NUMA nodes for each of the multiple the virtual machines includes:
judging whether a difference between the CPU load of a NUMA node with a lowest CPU load and the CPU load of other NUMA nodes is higher than a preset difference;
allocating the NUMA node with the lowest CPU load to the virtual machine, in a case that the difference is higher than the preset difference;
allocating a NUMA node that hosts a least number of VCPUs to the virtual machine, in a case that the difference is not higher than the preset difference; and
repeating the step of judging whether a difference between the CPU load of a NUMA node with a lowest CPU load and the CPU load of other NUMA nodes is higher than a preset difference and subsequent steps, until the number of NUMA nodes allocated to the virtual machine reaches the corresponding number.

Adjusting dispatch of the NUMA nodes includes:
selecting a NUMA node with an overcommitted CPU load as a node to be optimized;
judging whether there is a bearable node in the NUMA cluster, where the bearable node is a node whose CPU load is not overcommitted after taking over a virtual machine migrated from the node to be optimized;
migrating a virtual machine from the node to be optimized to the bearable node, in a case that there is a bearable node;
judging whether there is an exchangeable node in the NUMA cluster, in a case that there is no bearable node, where the exchangeable node is a node whose CPU load is not overcommitted after exchanging a virtual machine with the node to be optimized; and
exchanging a virtual machine between the node to be optimized and the exchangeable node, in a case that there is an exchangeable node.

Migrating a virtual machine from the node to be optimized to the bearable node includes:
migrating a virtual machine to the bearable node which does not host the preset virtual machine and has a lowest CPU load.

Optionally, migrating a virtual machine from the node to be optimized to the bearable node includes:
migrating a virtual machine with smallest memory occupation in the node to be optimized to the bearable node, where the virtual machine migrated to the bearable node does not include a virtual machine hosted on all of the multiple NUMA nodes.

In a case that each of the multiple NUMA node hosts the preset virtual machine, the virtual machine migrated to the bearable node is the virtual machine other than the preset virtual machine.

Optionally, the preset virtual machine in the NUMA node has a higher weight for CPU time slices in the NUMA node than that of the virtual machine other than the preset virtual machine in the NUMA node.

Optionally, the method further includes:
determining a NUMA node where a virtual machine using a large page memory resides as an important node in response to detecting the preset virtual machine using the large page memory; and
isolating a preset important service of the NUMA cluster, so that the preset important service runs on other NUMA nodes other than the important node.

Optionally, the preset virtual machine dominating in resource invocation comprises at least one of a virtual machine dominating in using CPU time slices and a virtual machine using a large page memory.

In a second aspect, an apparatus for dispatching NUMA nodes for virtual machines is disclosed according to the present disclosure. The apparatus includes:
a number determining module, configured to determine, for each of multiple virtual machines, a corresponding number of NUMA nodes;
an initial allocating module, configured to initially allocate the corresponding numbers of NUMA nodes to the multiple virtual machines respectively;
a load monitoring module, configured to monitor a CPU load of each of multiple NUMA nodes in a NUMA cluster; and
a dispatching module, configured to adjust dispatch of the NUMA nodes to balance the CPU loads in a case that the CPU load of a NUMA node is overcommitted; where a CPU load overcommitting threshold of a NUMA node where a preset virtual machine dominating in resource invocation resides is lower than the CPU load overcommitting threshold of a NUMA node where a virtual machine other than the preset virtual machine resides.

Optionally, the number determining module is specifically configured to: determining a number of NUMA nodes corresponding to each of multiple virtual machines, based on a relationship between a preset number of VCPUs of the virtual machine and a number of CPU cores of a single node.

Optionally, the number determining module is specifically configured to: judge whether the preset number of VCPUs is less than the total number of CPU cores of the NUMA cluster, where the total number of CPU cores is a product of the number of CPU cores of a single node and the total number of nodes; determine a number, which is obtained by rounding up a ratio of the preset number of VCPUs to the number of CPU cores of a single node, as the number of NUMA nodes corresponding to the virtual machine, in a case that the preset number of VCPUs is less than the total number of CPU cores; and determine the total number of nodes as the number of NUMA nodes corresponding to the virtual machine, in a case that the preset number of VCPUs is not less than the total number of CPU cores.

Optionally, the initial allocating module is specifically configured to: select a corresponding number of NUMA nodes for each of the multiple the virtual machines; and configure a CPU and a local memory of the corresponding number of NUMA nodes to be invoked by a corresponding virtual machine.

Optionally, the initial allocating module is specifically configured to: judge whether a difference between the CPU load of a NUMA node with a lowest CPU load and the CPU load of other NUMA nodes is higher than a preset difference; allocate the NUMA node with the lowest CPU load to the virtual machine, in a case that the difference is higher than the preset difference; allocate a NUMA node that hosts a least number of VCPUs to the virtual machine, in a case that the difference is not higher than the preset difference; and repeat the step of judging whether a difference between the CPU load of a NUMA node with a lowest CPU load and the CPU load of other NUMA nodes is higher than a preset difference and subsequent steps, until the number of NUMA nodes allocated to the virtual machine reaches the corresponding number.

The dispatching module specifically includes:
a selecting unit, configured to select a NUMA node with an overcommitted CPU load as a node to be optimized;
a first judging unit, configured to judge whether there is a bearable node in the NUMA cluster, where the bearable node is a node whose CPU load is not overcommitted after taking over a virtual machine migrated from the node to be optimized;
a migrating unit, configured to migrate a virtual machine from the node to be optimized to the bearable node, in a case that there is a bearable node;
a second judging unit, configured to judge whether there is an exchangeable node in the NUMA cluster, in a case that there is no bearable node, where, the exchangeable node is a node whose CPU load is not overcommitted after exchanging a virtual machine with the node to be optimized; and
an exchanging unit, configured to exchange a virtual machine between the node to be optimized and the exchangeable node, in a case that there is an exchangeable node.

Optionally, the migrating unit is specifically configured to: migrate a virtual machine to a bearable node which does not host the preset virtual machine and has a lowest CPU load.

Optionally, the migrating unit is specifically configured to: migrate a virtual machine with smallest memory occupation in the node to be optimized to the bearable node, where the virtual machine migrated to the bearable node does not include a virtual machine hosted on all of the multiple NUMA nodes.

In a case that each of the multiple NUMA node hosts the preset virtual machine, the virtual machine migrated to the bearable node is the virtual machine other than the preset virtual machine.

Optionally, the preset virtual machine has a higher weight for CPU time slices in the NUMA node than that of the virtual machine other than the preset virtual machine in the NUMA node.

Optionally, the apparatus further includes an isolating module, configured to: determine a NUMA node where a virtual machine using a large page memory resides as an important node in response to detecting the virtual machine using the large page memory; and isolate a preset important service of the NUMA cluster, so that the preset important service runs on other NUMA nodes other than the important node.

In a third aspect, an electronic device is disclosed according to the present disclosure. The electronic device includes:
a memory configured to store a computer program;
a processor configured to execute the computer program to implement the steps of any of the forgoing methods for dispatching NUMA nodes for virtual machines.

In a fourth aspect, a computer-readable storage medium is disclosed according to the present disclosure. The computer-readable storage medium has stored thereon computer program that, when executed by a processor, implements the steps of any of the forgoing methods for dispatching NUMA nodes for virtual machines.

The method for dispatching NUMA nodes for virtual machines according to the present disclosure includes: determining, for each of multiple virtual machines, a corresponding number of NUMA nodes; initially allocating the corresponding numbers of NUMA nodes to the multiple virtual machines respectively; monitoring a CPU load of each of multiple NUMA nodes in a NUMA cluster; and adjusting dispatch of the NUMA nodes to balance the CPU loads in a case that the CPU load of a NUMA node is overcommitted; where, a CPU load overcommitting threshold of a NUMA node where a preset virtual machine dominating in resource invocation resides is lower than the CPU load overcommitting threshold of a NUMA node where a virtual machine other than the preset virtual machine resides.

It can be seen that in the present disclosure, based on the mechanism of adjusting the dispatch of NUMA nodes for virtual machines, load balancing within the NUMA cluster can be effectively achieved, thereby balancing and improving the overall operating performance of the NUMA cluster. In addition, a mechanism of prioritization of virtual machines is introduced in the present disclosure, and operational performance of the node where the preset important virtual machine resides can be ensured preferentially in the adjustment of the dispatch in a flexible and convenient manner, to meet the performance requirements of users for different application, and greatly facilitate the usage by the users. The apparatus for dispatching NUMA nodes for virtual machines, the electronic device, and the computer-readable storage medium according to the present disclosure also have the above advantageous effects.

### BRIEF DESCRIPTION OF THE DRAWINGS

In order to describe technical solutions of embodiments in the present disclosure and in the conventional technology more clearly, drawings referred to in the embodiments of the present disclosure and the conventional technology are introduced simply as follows. Certainly, the following description for drawings of the embodiments of the present disclosure are only some embodiments of the present disclosure, and those skilled in the art can obtain other drawings in accordance with the provided drawings without any creative effort, the other drawings obtained are also fall into the scope of protection of the present disclosure.
Figure 1 is a flowchart illustrating a method for dispatching NUMA nodes for virtual machines according to an embodiment of the present disclosure;
Figure 2 is a flowchart illustrating a method for selecting a corresponding number of NUMA nodes for a virtual machine according to an embodiment of the present disclosure;
Figure 3 is a diagram schematically illustrating initial allocation of NUMA nodes according to an embodiment of the present disclosure;
Figure 4 is a flowchart illustrating a method for adjusting dispatch of NUMA nodes according to an embodiment of the present disclosure;
Figure 5 is a block diagram showing the structure of an apparatus for dispatching NUMA nodes for virtual machines according to an embodiment of the present disclosure; and
Figure 6 is a block diagram showing the structure of an electronic device according to an embodiment of the present disclosure.

### DETAILED DESCRIPTION OF THE EMBODIMENTS

The essence of the present disclosure is to provide a method for dispatching NUMA nodes for virtual machines, an apparatus, an electronic device and a computer-readable storage medium, to flexibly and reasonably dispatch resources according to application requirements of different virtual machines, so as to meet the demands of users.

In order to describe the technical solutions in the embodiments of the present disclosure more clearly and completely, the technical solutions in the embodiments of the present disclosure will be described below in combination with the drawings in the embodiments of the present disclosure. It is apparent that the described embodiments are only some embodiments of the present disclosure, rather than all embodiments.

Currently, conventional methods for dispatching hardware resources for virtual machines generally have certain deficiencies and cannot meet increasing demands of users. For example, in some specific service scenarios, virtual machines used to perform some specific important tasks may require a high guaranteed supply of resources, which cannot be met by the current dispatching policy of Linux kernel in the industry. In view of this, a method for dispatching NUMA nodes for virtual machines is provided according to the present disclosure, which can effectively solve the above problem.

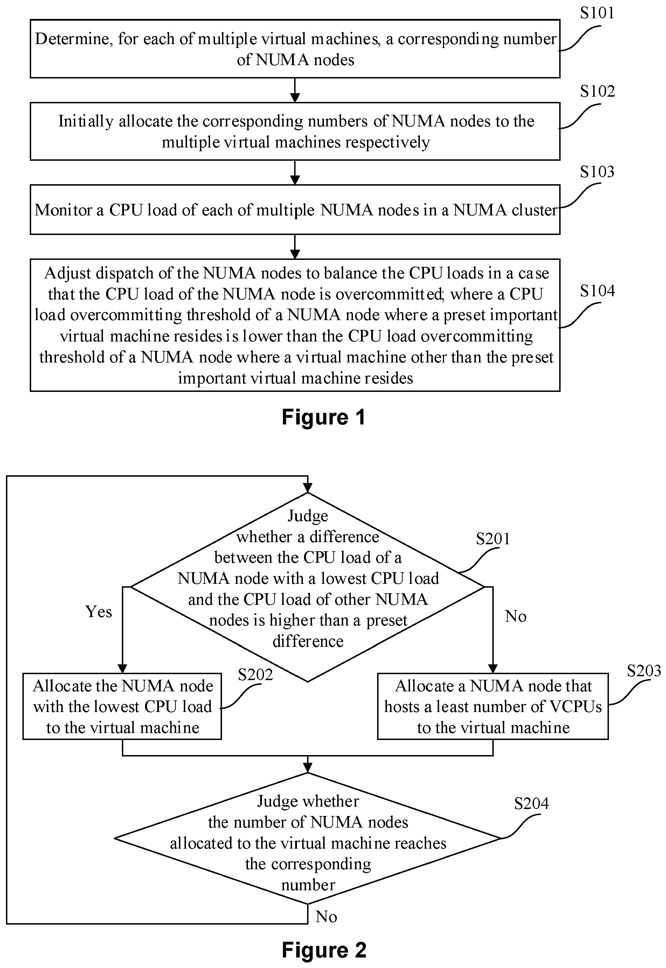

Reference is made to Figure 1. A method for dispatching NUMA nodes for virtual machines is disclosed according to an embodiment of the present disclosure. The method mainly includes steps S101 to S104.

In step S101, number of NUMA nodes corresponding to each of multiple virtual machines is determined.

Currently, most of mainstream servers adopt a Non-uniform memory access (NUMA) architecture, and a server cluster for hosting and constructing virtual machines may be referred as a NUMA cluster. In some specific application scenarios, the NUMA cluster may specifically be, in a functional sense, a hyper-converged platform system, namely, a server cluster that integrates multiple functions such as storage, computing, and network.

It should be noted that, for a virtual machine, each VCPU, i.e., a virtual CPU, is implemented based on a physical CPU in the NUMA cluster, and the physical CPU constitutes a NUMA node of the virtual machine. Of course, the NUMA nodes further include memory hardware in addition to CPU hardware, and a process of allocating NUMA nodes to a virtual machine is a process of configuring physical CPU and physical memory for the virtual machine.

It should also be noted that, limited by actual application situation, one physical CPU may be allocated to only one virtual machine, and one or more VCPUs may be further constructed for the virtual machine. One physical CPU can alternatively be allocated to multiple virtual machines at the same time, i.e., can provide services of hardware resources for multiple virtual machines at the same time.

The NUMA cluster has a fixed total number of hardware resources. When performing resource dispatching for multiple virtual machines to allocate NUMA nodes, the number of NUMA nodes corresponding to each of multiple virtual machine may be determined at first. It is easily understood that the numbers of VCPUs required for virtual machines configured to perform different tasks are different, and therefore, the numbers of the required NUMA nodes are not necessarily the same.

In step S102, corresponding numbers of NUMA nodes are initially allocated to the multiple virtual machines respectively.

For a virtual machine, after the number of NUMA nodes corresponding to the virtual machine is determined, nodes may be allocated for the virtual machine based on the hardware resources of the NUMA cluster. In a case that the number of virtual machines is multiple, initial allocation can be performed for each virtual machine in sequence.

In step S103, a CPU load of each of multiple NUMA nodes in a NUMA cluster is monitored.

In step S104, dispatch of NUMA nodes is adjusted to balance the CPU loads in a case that the CPU load of a NUMA node is overcommitted.

A CPU load overcommitting threshold of a NUMA node where a preset important virtual machine resides is lower than the CPU load overcommitting threshold of a NUMA node where a non-preset-important virtual machine resides.

It should be noted that, in the method for dispatching NUMA nodes for virtual machines according to the embodiment of the present disclosure, after the NUMA nodes are initially allocated to the virtual machines, the dispatching is subjected to subsequent adjustment. Specifically, considering that different virtual machines perform different tasks, the occupation of hardware resources of the NUMA nodes is different, and load imbalance may occur between the NUMA nodes. Therefore, it is necessary to adjust the dispatch to balance the load.

It is worth mentioning that, in the present disclosure, in order to fully adapt to different service requirements in different application scenarios, virtual machines that perform different tasks are subjected to prioritization. Specifically, according to user settings, some virtual machines configured to perform important tasks have a higher priority and have a dominant position in resource invocation, which are each referred to as a preset important virtual machine. Virtual machines other than the preset important virtual machines may be referred to as non-preset-important virtual machines.

Dispatch of NUMA nodes may be adjusted in a case that the CPU load of a NUMA node is overcommitted. Overcommitting means that the CPU load of the NUMA node is heavy, and the overcommitting holds when the actual load exceeds the CPU load overcommitting threshold. For a certain overcommitted NUMA node, the adjustment of the dispatch can make the NUMA node no longer be overcommitted; for the entire NUMA cluster, the adjustment of the dispatch can effectively balance the overall load of the cluster, and balance the load and the operation performance of each of the NUMA nodes.

Since the preset important virtual machine has a higher priority, according to the present disclosure, when load balancing is performed, it is to preferentially ensure the operational performance of the NUMA node where the preset important virtual machine resides. Therefore, the CPU load overcommitting threshold of the NUMA node where the preset important virtual machine resides may be lower than the CPU load overcommitting threshold of the NUMA node where the non-preset-important virtual machine resides.

Specifically, for a NUMA node that does not host the preset important virtual machine, in case that there is no hyper-threading, the NUMA node may be regarded as overcommitting when the CPU load exceeds 0.9 times the number of cores of physical CPU of the NUMA node; and in a case that there is hyper-threading, the NUMA node may be regarded as overcommitting when the CPU load exceeds 1.3 times the number of cores of physical CPU of the NUMA node.

For example, for a NUMA node with a 14-core CPU, in a case that there is no hyper-threading, it may be regarded as overcommitting when the CPU load exceeds 14*0.9=1260%; and in a case that there is hyper-threading, it may be regarded as overcommitting when the CPU load exceeds 14*1.3=1820%.

For the NUMA node that hosts the preset important virtual machine, the CPU load overcommitting threshold may be lower than the above threshold in the same situation, so as to provide a relatively favorable resource environment for the operation of the preset important virtual machine.

The method for dispatching NUMA nodes for virtual machines according to the embodiment of the present disclosure includes: determining, for each of multiple virtual machines, a corresponding number of NUMA nodes; initially allocating the corresponding number of NUMA nodes to the multiple virtual machines respectively; monitoring a CPU load of each of multiple NUMA nodes in a NUMA cluster; and adjusting dispatch of the NUMA nodes to balance the CPU loads in a case that the CPU load of a NUMA node is overcommitted; where, a CPU load overcommitting threshold of a NUMA node where a preset important virtual machine resides is lower than the CPU load overcommitting threshold of a NUMA node where a virtual machine other than the preset important virtual machine resides.

It can be seen that in the present disclosure, based on the mechanism of adjusting the dispatch of NUMA nodes for virtual machines, load balancing within the NUMA cluster can be effectively achieved, thereby balancing and improving the overall operating performance of the NUMA cluster. In addition, a mechanism of prioritization of virtual machines is introduced in the present disclosure, and operational performance of the node where the preset important virtual machine resides can be ensured preferentially in the adjustment of the dispatch in a flexible and convenient manner, to meet the performance requirements of users for different applications, and greatly facilitate the usage by the users.

As a specific embodiment, when determining the number of NUMA nodes corresponding to the virtual machine in step S101, the number of NUMA nodes corresponding to the virtual machine may be specifically determined based on a relationship between a preset number of VCPUs of the virtual machine and the number of CPU cores of a single node. Generally, the configuration of each NUMA node, such as the number of CPU cores, is the same.

Specifically, for a virtual machine, it may be judged whether the preset number of VCPUs of the virtual machine is less than the total number of CPU cores of the NUMA cluster, where the total number of CPU cores is a product of the number of CPU cores of a single node and the total number of nodes. In a case that the preset number of VCPUs is less than the total number of CPU cores, a number, which is obtained by rounding up a ratio of the preset number of VCPUs to the number of CPU cores of a single node, may be determined as the number of NUMA nodes corresponding to the virtual machine. In a case that the preset number of VCPUs is not less than the total number of CPU cores, the total number of nodes may be determined as the number of NUMA nodes corresponding to the virtual machine; in this case, the number of VCPUs can be allocated evenly to the NUMA nodes.

For example, if the number of VCPUs of a certain virtual machine is greater than the number of CPU cores of a single NUMA node and less than the number of CPU cores of 2 NUMA nodes, the corresponding number for the virtual machine is 2. In this way, 2 NUMA nodes can be selected for the virtual machine, and the VCPUs required by the virtual machine may be evenly allocated to the 2 NUMA nodes.

As a specific embodiment, in the method for dispatching NUMA nodes for virtual machines according to the embodiment of the present disclosure, step S102 is to initially allocate the corresponding numbers of NUMA nodes to the multiple virtual machines respectively, which may specifically include: selecting the corresponding number of NUMA nodes for each of the virtual machines; and configuring CPUs and local memories of the corresponding number of NUMA nodes to be invoked by the corresponding virtual machine.

As described above, most of servers in the industry use the NUMA architecture. In the NUMA architecture, time required for memory access depends on a memory location to be accessed by a processor. The CPU accesses a local memory of the node faster than accessing a non-local memory, and the access to the remote memory inevitably affects access speed. Therefore, in the present embodiment, when initially allocating the NUMA nodes to the virtual machine, the CPU and memory resources of a node may be allocated to the virtual machine, so as to avoid lowered access efficiency due to remote memory access.

The process of selecting the corresponding number of NUMA nodes for each of the multiple virtual machines can be referred to Figure 2 for details. The process mainly includes steps S201 to S204.

In step S201, it is judged whether a difference between the CPU load of a NUMA node with a lowest CPU load and the CPU load of other NUMA nodes is higher than a preset difference; in a case that the difference is higher than the preset difference, proceeds to S202; and in a case that the difference is not higher than the preset difference, proceeds to S203.

In step S202, the NUMA node with the lowest CPU load is allocated to the virtual machine. Then process proceeds to S204.

In step S203, a NUMA node that hosts a least number of VCPUs is allocated to the virtual machine. Then process proceeds to S204.

In this embodiment, the current load of the NUMA node is considered when initially selecting the NUMA node for the virtual machine, so as to achieve load balancing for the NUMA cluster. Specifically, each time selecting NUMA nodes for a virtual machine, a NUMA node with the lowest CPU load at that moment may be selected. However, in a case that the NUMA nodes have insignificant difference in CPU loads, that is, not higher than the preset difference, it makes little difference whether the NUMA node with the lowest CPU load is selected. Therefore, the NUMA node that currently hosts the least number of VCPUs may be selected. The preset difference may be 5%.

In step S204, it is judged whether the number of NUMA nodes allocated to the virtual machine reaches the corresponding number; in a case that the judgment is negative, proceeds to S201.

By repeating the steps of S201 to S203, NUMA nodes are selected for the virtual machine until the corresponding number is reached.

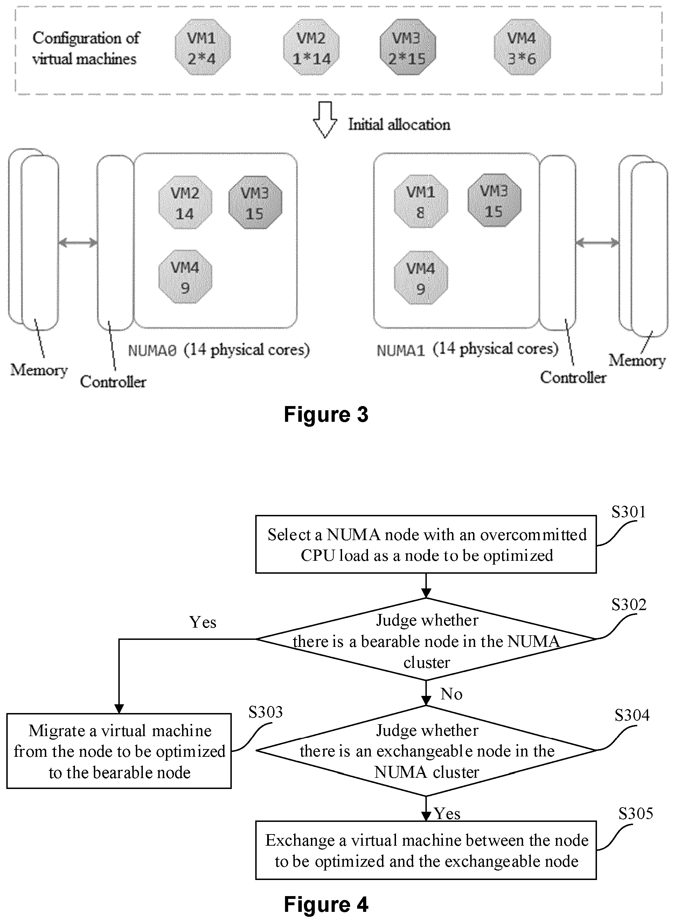

Reference is made to Figure 3. Figure 3 is a diagram schematically illustrating an initial allocation of NUMA nodes according to an embodiment of the present disclosure. Specifically, Figure 3 shows four virtual machines, which have 8, 14, 30, and 18 VCPUs, respectively. Supposed that there are 2 NUMA nodes in the current NUMA cluster, and each NUMA node has 14 CPU cores.

In an initial allocation shown in Figure 3, for a virtual machine VM1, the number of VCPUs (8) is less than 14, therefore the VCPUs can be all allocated to a NUMA1 node; for a virtual machine VM2, the number of VCPUs (14) is equal to 14, therefore the VCPUs can be all allocated to a NUMAO node; for a virtual machine VM3, the number of VCPUs (30) is greater than the total number of CPU cores (28), therefore the VCPUs can be evenly allocated to the NUMAO node and the NUMA1 node, and each node hosts 15 VCPUs for the virtual machine VM3; for a virtual machine VM4, the number of VCPUs (18) is greater than 14 but less than the total number of CPU cores (28), therefore the VCPUs can be evenly allocated to the NUMAO node and the NUMA1 node, and each node hosts 9 VCPUs for the virtual machine VM4.

As a specific embodiment, the process of adjusting the dispatch of the NUMA nodes in step 104 may be specifically referred to Figure 4. The process mainly includes S301 to S305.

In step S301, a NUMA node with overcommitted CPU load is selected as a node to be optimized.

In step S302, it is judged whether there is a bearable node in the NUMA cluster; in a case that there is a bearable node, proceeds to S303; and in a case that there is no bearable node, proceeds to S304.

The bearable node is a node whose CPU load is not overcommitted after taking over virtual machine(s) migrated from the node to be optimized.

Specifically, if there is a NUMA node that is not overcommitted in the cluster, and neither the NUMA node nor the node to be optimized will be overcommitted after migrating virtual machine(s) to the NUMA node that is not overcommitted, the node can be determined to be the bearable node, i.e., a node configured to take over the virtual machine(s) migrated from the node to be optimized.

In step S303, migration of virtual machine(s) from the node to be optimized to the bearable node is performed.

As a specific embodiment, the virtual machine(s) may be migrated to a bearable node which does not host any preset important virtual machine and has the lowest CPU load. Specifically, when migrating a virtual machine from the node to be optimized to the bearable node, if there are multiple bearable nodes, it is preferable to select the node with the lowest CPU load from the bearable nodes that do not host any preset important virtual machine, to which the migration of the virtual machine(s) is to be performed.

As a specific embodiment, the virtual machine with smallest memory occupation in the node to be optimized is migrated to the bearable node; where the virtual machine to be migrated to the bearable node does not include a virtual machine hosted on all of the NUMA nodes.

Specifically, since the migration of a virtual machine with an excessively large memory is cumbersome and will occupy more resources of the bearable node, it is preferable to migrate the virtual machine with smallest memory occupation in the present embodiment.

In addition, when selecting a virtual machine to be migrated, in addition to the memory occupation, the distribution of the virtual machine in the NUMA nodes can further be considered. For the sake of service security, the VCPUs of a virtual machine should be distributed on as much different NUMA nodes as possible. Therefore, if a virtual machine is hosted on all NUMA nodes due to a large number of VCPUs, the virtual machine can be ignored when selecting the virtual machine to be migrated.

In addition, the priority of the virtual machine can further be considered when selecting a virtual machine to be migrated. As a specific embodiment, when each of the NUMA nodes hosts a preset important virtual machine, the virtual machine to be migrated to the bearable node is a virtual machine other than the preset important virtual machine. Specifically, since tasks performed by the preset important virtual machine are relatively important, frequent migration is not recommended. Therefore, in this case, the virtual machine to be migrated may be selected from the virtual machines other than the preset important virtual machine.

In step S304, it is judged whether there is an exchangeable node in the NUMA cluster; if the judgment is positive, proceeds to S305.

The exchangeable node is a node whose CPU load is not overcommitted after exchanging virtual machines with the node to be optimized.

Specifically, if there is a certain NUMA node that is not overcommitted in the cluster, and neither the NUMA node nor the node to be optimized are overcommitted after exchanging virtual machines between the node to be optimized and the non-overcommitted NUMA node, the node may be determined to be an exchangeable node, that is, a node for exchanging the virtual machines with the node to be optimized.

In step S305, exchanging of virtual machines is performed between the node to be optimized and the exchangeable node.

Since different virtual machines occupy different resources, the performance balancing between the node to be optimized and the exchangeable node can be achieved by exchanging different virtual machines. Therefore, in the exchanging of the virtual machines, the virtual machine that occupies a larger memory in the node to be optimized may be exchanged with the virtual machine that occupies a smaller memory in the exchangeable node. It is easily understood that, in a case that there are multiple exchangeable nodes, they may be selected with reference to the selection criterion of the bearable node.

In addition, it should be noted that when there is neither bearable node nor exchangeable node, it is preferable to ensure the NUMA node that hosts the preset important virtual machine to be not overcommitted and allow the NUMA node that does not host the preset important virtual machine to be overcommitted.

For example, in a case that a certain NUMA node hosting the preset important virtual machine is overcommitted, if there is neither bearable node nor exchangeable node, a NUMA node that does not host the preset important virtual machine can still be selected for the migration or exchanging of the virtual machine, to ensure that the NUMA node hosting the preset important virtual machine is not overcommitted. As for the NUMA node selected to take over or exchange the virtual machine, it is allowed to be overcommitted after the migration or exchanging of the virtual machines.

As a specific embodiment, on the basis of the above content, in the method for dispatching NUMA nodes for virtual machines according to the embodiment of the present disclosure, the preset important virtual machine has a higher weight for CPU time slices in the NUMA node than that of the non-preset-important virtual machine in the NUMA node.

Specifically, in addition to providing preferential guarantee for the node where the preset important virtual machine resides when adjusting the dispatch of the NUMA nodes, the preset important virtual machine may also be provided with preferential guarantee in the usage of the physical CPU according to the present embodiment. When one NUMA node is allocated to multiple virtual machines, VCPU threads of different virtual machines invoke the physical CPU resources of the NUMA node in units of time slices. In this way, in order to fully optimize the operating environment of the preset important virtual machine, the preset important virtual machine may be set to have larger weight for the CPU time slices than that of other non-preset-important virtual machines in the same node.

As a specific embodiment, on the basis of the above content, the method for dispatching NUMA nodes for virtual machines according to the embodiment of the present disclosure may further provide specific resource guarantees for some preset important virtual machines: in response to detecting a preset important virtual machine that uses large (huge) page memory, a NUMA node where the preset important virtual machine using the large page memory resides is determined as an important node, and a preset important service of the NUMA cluster is isolated so that the preset important service runs on other NUMA nodes other than the important node.

Specifically, some large-scale preset important virtual machines occupy more memory resources, and therefore a large page memory may be used. Compared with an ordinary memory in page size of 2kB used by some ordinary virtual machines, the large page memory is in page size of more than 4kB, even up to a page size of the order of GB.

Some preset important services in the NUMA cluster commonly need to occupy certain hardware resources, such as storage services, management services. Therefore, in order to ensure the smooth operation of preset important virtual machines, these preset important services are isolated within other nodes, to be prevented from competing with the preset important virtual machines for hardware resources of the node. In this way, the service of the cluster can operate normally, and the computing performance of the preset important virtual machines can be guaranteed, thereby maximizing the performance of the services of the cluster.

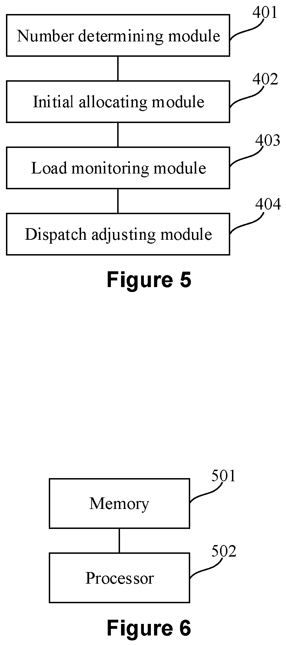

Reference is made to Figure 5. An apparatus for dispatching NUMA nodes for virtual machines is disclosed according to an embodiment of the present disclosure. The apparatus mainly includes a number determining module 401, an initial allocating module 402, a load monitoring module 403, and a dispatch adjusting module 404.

The number determining module 401 is configured to determine, for each of multiple virtual machines, a corresponding number of NUMA nodes.

The initial allocating module 402 is configured to initially allocate corresponding numbers of NUMA nodes to the multiple virtual machines respectively.

The load monitoring module 403 is configured to monitor a CPU load of each of multiple NUMA nodes in a NUMA cluster.

The dispatch adjusting module 404 is configured to adjust dispatch of the NUMA nodes to balance the CPU loads in a case that the CPU load of a NUMA node is overcommitted; where, a CPU load overcommitting threshold of a NUMA node where a preset important virtual machine resides is lower than the CPU load overcommitting threshold of a NUMA node where a virtual machine other than the preset important virtual machine resides.

It can be seen that in the apparatus for dispatching NUMA nodes for virtual machines according to the embodiment of the present disclosure, based on the mechanism of adjusting the dispatch of NUMA nodes for virtual machines, load balancing within the NUMA cluster can be effectively achieved, thereby balancing and improving the overall operating performance of the NUMA cluster. In addition, a mechanism of adjusting the dispatch of is introduced in the present disclosure, and operational performance of the node where the preset important virtual machine resides can be ensured preferentially in the adjustment of the dispatch in a flexible and convenient manner, to meet the performance requirements of users for different application, and greatly facilitate the usage by the users.

For the specific details of the apparatus for dispatching NUMA nodes for virtual machines, reference may be made to the foregoing detailed introduction of the method for dispatching NUMA nodes for virtual machines, which will not be repeated here.

In a specific embodiment, on the basis of the above content, in the apparatus for dispatching NUMA nodes for virtual machines according to the embodiment of the present disclosure, the number determining module 401 is further configured to: determine the number of NUMA nodes corresponding to a virtual machine, based on a relationship between a preset number of VCPUs of the virtual machine and the number of CPU cores of a single node.

In a specific embodiment, on the basis of the above content, in the apparatus for dispatching NUMA nodes for virtual machines according to the embodiment of the present disclosure, the number determining module 401 is specifically configured to: judge whether the preset number of VCPUs is less than the total number of CPU cores of the NUMA cluster, where the total number of CPU cores is a product of the number of CPU cores of a single node and the total number of nodes; determine a number, which is obtained by rounding up a ratio of the preset number of VCPUs to the number of CPU cores of a single node, as the number of NUMA nodes corresponding to the virtual machine, in a case that the preset number of VCPUs is less than the total number of CPU cores; and determine the total number of nodes as the number of NUMA nodes corresponding to the virtual machine, in a case that the preset number of VCPUs is not less than the total number of CPU cores.

In a specific embodiment, on the basis of the above content, in the apparatus for dispatching NUMA nodes for virtual machines according to the embodiment of the present disclosure, the initial allocating module 402 is specifically configured to: select the corresponding number of NUMA nodes for each of the multiple the virtual machines; and configure CPUs and local memories of the corresponding number of NUMA nodes to be invoked by the corresponding virtual machine.

In a specific embodiment, on the basis of the above content, in the apparatus for dispatching NUMA nodes for virtual machines according to the embodiment of the present disclosure, the initial allocating module 402 is specifically configured to: judge whether a difference between the CPU load of a NUMA node with a lowest CPU load and the CPU load of other NUMA nodes is higher than a preset difference; allocate the NUMA node with the lowest CPU load to the virtual machine, in a case that the difference is higher than the preset difference; allocate a NUMA node that hosts a least number of VCPUs to the virtual machine, in a case that the difference is not higher than the preset difference; and repeat the step of judging whether a difference between the CPU load of a NUMA node with a lowest CPU load and the CPU load of other NUMA nodes is higher than a preset difference and subsequent steps, until the number of NUMA nodes allocated to the virtual machine reaches the corresponding number.

In a specific embodiment, on the basis of the above content, in the apparatus for dispatching NUMA nodes for virtual machines according to the embodiment of the present disclosure, the dispatch adjusting module 404 specifically includes:
a selecting unit, configured to select a NUMA node with an overcommitted CPU load as a node to be optimized;
a first judging unit, configured to judge whether there is a bearable node in the NUMA cluster, where the bearable node is a node whose CPU load is not overcommitted after taking over a virtual machine migrated from the node to be optimized;
a migrating unit, configured to migrate a virtual machine from the node to be optimized to the bearable node, in a case that there is a bearable node;
a second judging unit, configured to judge whether there is an exchangeable node in the NUMA cluster, in a case that there is no bearable node, where the exchangeable node is a node whose CPU load is not overcommitted after exchanging a virtual machine with the node to be optimized; and
an exchanging unit, configured to exchange a virtual machine between the node to be optimized and the exchangeable node, in a case that there is an exchangeable node.

In a specific embodiment, on the basis of the above content, in the apparatus for dispatching NUMA nodes for virtual machines according to the embodiment of the present disclosure, the migrating unit is specifically configured to: migrate a virtual machine to a bearable node which does not host the preset important virtual machine and has a lowest CPU load.

In a specific embodiment, on the basis of the above content, in the apparatus for dispatching NUMA nodes for virtual machines according to the embodiment of the present disclosure, the migrating unit is specifically configured to: migrate a virtual machine with smallest memory occupation in the node to be optimized to the bearable node, where the virtual machine migrated to the bearable node does not include a virtual machine hosted on all of the multiple NUMA nodes.

In a specific embodiment, on the basis of the above content, in the apparatus for dispatching NUMA nodes for virtual machines according to the embodiment of the present disclosure, in a case that each of the multiple NUMA node hosts the preset important virtual machine, the virtual machine migrated to the bearable node is the virtual machine other than the preset important virtual machine.

In a specific embodiment, on the basis of the above content, in the apparatus for dispatching NUMA nodes for virtual machines according to the embodiment of the present disclosure, the preset important virtual machine has a higher weight for CPU time slices in the NUMA node than that of the virtual machine other than the preset important virtual machine in the NUMA node.

In a specific embodiment, on the basis of the above content, in the apparatus for dispatching NUMA nodes for virtual machines according to the embodiment of the present disclosure, the apparatus further includes:
an isolating module, configured to: determine a NUMA node where a preset important virtual machine using a large page memory resides as an important node in response to detecting the preset important virtual machine that uses the large page memory; and isolate a preset important service of the NUMA cluster, so that the preset important service runs on other NUMA nodes other than the important node.

Reference is made to Figure 6. An electronic device is disclosed according to an embodiment of the present disclosure. The electronic device includes a memory 501 and a processor 502.

The memory 501 is configured for storing computer programs.

The processor 502 is configured to execute the computer program to implement the steps of the method for dispatching NUMA nodes for virtual machines according to any one of the above embodiments.

Further, a computer readable storage medium is further provided according to an embodiment of the present disclosure. The computer readable storage medium stores a computer program. The computer program, when being executed by a processor, implements the steps of the method for dispatching NUMA nodes for virtual machines according to any one of the above embodiments.

For the specific content of the electronic device and the computer-readable storage medium, reference may be made to the foregoing detailed introduction of the method for dispatching NUMA nodes for virtual machines, which will not be repeated here.

Various embodiments of the present disclosure are described in a progressive manner, and each embodiment lays emphasis on differences from other embodiments. For the same or similar parts between the embodiments, one may refer to description of other embodiments. Since the apparatuses disclosed in the embodiments correspond to the methods disclosed in the embodiments, the description of the apparatuses is brief, and reference may be made to the relevant part of the methods.

It should also be noted that, in this application document, the relationship terminologies such as first, second are only used to distinguish one entity or operation from another, rather than to necessitate or imply that the actual relationship or order exists between the entities or operations. Moreover, the terms "include", "comprise" or any other variation are intended to cover non-exclusive inclusion, so that a process, method, article or device including a series of elements not only includes those elements, but also includes other elements that are not explicitly listed, or elements inherent in such process, method, article or device. Unless expressively limited otherwise, an element defined by a statement of "comprising (including) one..." does not exclude a case that other similar elements exist in the process, method, article or device including the element.

## Claims

1. A method for dispatching NUMA nodes for virtual machines, the method comprising:
determining (S101), for each of a plurality of virtual machines, a corresponding number of NUMA nodes;
initially allocating (S102) the corresponding numbers of NUMA nodes to the plurality of virtual machines respectively;
monitoring (S103) a CPU load of each of the NUMA nodes in a NUMA cluster; and
adjusting (S104) dispatch of the NUMA nodes to balance the CPU loads in a case that the CPU load of a NUMA node is overcommitted;
**characterized in that**:
a CPU load overcommitting threshold of a NUMA node where a preset important virtual machine resides is lower than the CPU load overcommitting threshold of a NUMA node where a virtual machine other than the preset important virtual machine resides,
important virtual machines are virtual machines configured according to user settings to perform important tasks, have a higher priority and have a dominant position in resource invocation,
the adjusting dispatch of the NUMA nodes comprises:
selecting (S301) a NUMA node with an overcommitted CPU load as a node to be optimized;
judging (S302) whether there is a bearable node in the NUMA cluster, wherein the bearable node is a node whose CPU load is not overcommitted after taking over a virtual machine migrated from the node to be optimized;
migrating (S303) a virtual machine from the node to be optimized to the bearable node, in a case that there is a bearable node, comprising migrating a virtual machine to a bearable node which does not host the preset important virtual machine and has a lowest CPU load;
judging (S304) whether there is an exchangeable node in the NUMA cluster in a case that there is no bearable node, wherein the exchangeable node is a node whose CPU load is not overcommitted after exchanging a virtual machine with the node to be optimized; and
exchanging (S305) a virtual machine between the node to be optimized and the exchangeable node, in a case that there is an exchangeable node, and
in a case that each of the plurality of NUMA node hosts the preset important virtual machine, the virtual machine to be migrated to the bearable node is the virtual machine other than the preset important virtual machine.

2. The method for dispatching NUMA nodes for virtual machines according to claim 1, wherein determining (S101), for each of a plurality of virtual machines, a corresponding number of NUMA nodes comprises:
determining the number of NUMA nodes corresponding to each of the virtual machines, based on a relationship between a preset number of VCPUs of the virtual machine and a number of CPU cores of a single node.

3. The method for dispatching NUMA nodes for virtual machines according to claim 2, wherein determining the number of NUMA nodes corresponding to each of the virtual machines, based on a relationship between a preset number of VCPUs of the virtual machine and a number of CPU cores of a single node comprises:
judging whether the preset number of VCPUs is less than a total number of CPU cores of the NUMA cluster, wherein the total number of CPU cores is a product of the number of CPU cores of a single node and a total number of nodes;
determining a number, which is obtained by rounding up a ratio of the preset number of VCPUs to the number of CPU cores of a single node, as the number of NUMA nodes corresponding to the virtual machine, in a case that the preset number of VCPUs is less than the total number of CPU cores; and
determining the total number of nodes as the number of NUMA nodes corresponding to the virtual machine, in a case that the preset number of VCPUs is not less than the total number of CPU cores.

4. The method for dispatching NUMA nodes for virtual machines according to claim 1, wherein initially allocating the corresponding numbers of NUMA nodes to the plurality of virtual machines respectively comprises:
selecting the corresponding number of NUMA nodes for each of the plurality of the virtual machines; and
configuring CPUs and local memories of the corresponding number of NUMA nodes to be invoked by the corresponding virtual machine.

5. The method for dispatching NUMA nodes for virtual machines according to claim 4, wherein selecting the corresponding number of NUMA nodes for each of the plurality of the virtual machines comprises:
judging (S201) whether a difference between the CPU load of a NUMA node with a lowest CPU load and the CPU load of other NUMA nodes is higher than a preset difference;
allocating (S202) the NUMA node with the lowest CPU load to the virtual machine, in a case that the difference is higher than the preset difference;
allocating (S203) a NUMA node that hosts a least number of VCPUs to the virtual machine, in a case that the difference is not higher than the preset difference; and
repeating (S204) the step of judging whether a difference between the CPU load of a NUMA node with a lowest CPU load and the CPU load of other NUMA nodes is higher than a preset difference and subsequent steps, until the number of NUMA nodes allocated to the virtual machine reaches the corresponding number.

6. The method for dispatching NUMA nodes for virtual machines according to claim 1, wherein migrating a virtual machine from the node to be optimized to the bearable node comprises:
migrating a virtual machine with smallest memory occupation in the node to be optimized to the bearable node, wherein the virtual machine migrated to the bearable node does not comprise a virtual machine hosted on all of the plurality of NUMA nodes.

7. The method for dispatching NUMA nodes for virtual machines according to any one of claims 1 to 6, wherein the preset important virtual machine has a higher weight for CPU time slices in the NUMA node than that of the virtual machine other than the preset important virtual machine in the NUMA node.

8. The method for dispatching NUMA nodes for virtual machines according to claim 7, further comprising:
determining a NUMA node where a preset important virtual machine using a large page memory resides as an important node in response to detecting the preset important virtual machine using the large page memory; and
isolating a preset important service of the NUMA cluster, so that the preset important service runs on other NUMA nodes other than the important node.

9. The method for dispatching NUMA nodes for virtual machines according to claim 1, wherein the preset important virtual machine comprises at least one of a virtual machine dominating in using CPU time slices and a virtual machine using a large page memory.

10. An apparatus for dispatching NUMA nodes for virtual machines, the apparatus comprising:
a number determining module (401), configured to determine, for each of a plurality of virtual machines, a corresponding number of NUMA nodes;
an initial allocating module (402), configured to initially allocate the corresponding numbers of NUMA nodes to the plurality of virtual machines respectively;
a load monitoring module (403), configured to monitor a CPU load of each of the NUMA nodes in a NUMA cluster; and
a dispatch adjusting module (404), configured to adjust dispatch of the NUMA nodes to balance the CPU loads in a case that the CPU load of a NUMA node is overcommitted;
**characterized in that**:
a CPU load overcommitting threshold of a NUMA node where a preset important virtual machine resides is lower than the CPU load overcommitting threshold of a NUMA node where a virtual machine other than the preset important virtual machine resides,
important virtual machines are virtual machines configured according to user settings to perform important tasks, have a higher priority and have a dominant position in resource invocation,
the dispatch adjusting module (404) is configured for:
selecting a NUMA node with an overcommitted CPU load as a node to be optimized;
judging whether there is a bearable node in the NUMA cluster, wherein the bearable node is a node whose CPU load is not overcommitted after taking over a virtual machine migrated from the node to be optimized;
migrating a virtual machine from the node to be optimized to the bearable node, in a case that there is a bearable node, comprising migrating a virtual machine to a bearable node which does not host the preset important virtual machine and has a lowest CPU load;
judging whether there is an exchangeable node in the NUMA cluster in a case that there is no bearable node, wherein the exchangeable node is a node whose CPU load is not overcommitted after exchanging a virtual machine with the node to be optimized; and
exchanging a virtual machine between the node to be optimized and the exchangeable node, in a case that there is an exchangeable node, and
in a case that each of the plurality of NUMA node hosts the preset important virtual machine, the virtual machine to be migrated to the bearable node is the virtual machine other than the preset important virtual machine.

11. An electronic device, comprising:
a memory (501) configured to store a computer program;
a processor (502) configured to execute the computer program to implement the steps of the method for dispatching NUMA nodes for virtual machines according to any one of claims 1 to 9.

12. A computer-readable storage medium having stored thereon computer program that, when being executed by a processor, implements the steps of the method for dispatching NUMA nodes for virtual machines according to any one of claims 1 to 9.

## Patentansprüche

1. Verfahren zum Zuweisen von NUMA-Knoten für virtuelle Maschinen, wobei das Verfahren umfasst:
Bestimmen (S101) einer entsprechenden Anzahl von NUMA-Knoten für jede einer Vielzahl von virtuellen Maschinen;
Anfängliches Zuweisen (S102) der entsprechenden Anzahl von NUMA-Knoten jeweils an die Vielzahl virtuellen Maschinen;
Überwachen (S103) einer CPU-Auslastung jedes der NUMA-Knoten in einem NUMA-Cluster; und
Anpassen (S104) der Zuweisung der NUMA-Knoten, um die CPU-Auslastungen auszugleichen, falls die CPU-Auslastung eines NUMA-Knotens überlastet ist;
**dadurch gekennzeichnet, dass**:
ein Schwellenwert für die Überlastung der CPU-Auslastung eines NUMA-Knotens, auf dem sich eine voreingestellte wichtige virtuelle Maschine befindet, niedriger ist als der Schwellenwert für die Überlastung der CPU-Auslastung eines NUMA-Knotens, auf dem sich eine andere virtuelle Maschine als die voreingestellte wichtige virtuelle Maschine befindet,
wichtige virtuelle Maschinen sind virtuelle Maschinen, die gemäß Benutzereinstellungen zur Ausführung wichtiger Aufgaben konfiguriert sind, sie eine höhere Priorität haben und bei der Ressourcenaufrufung eine vorrangige Stellung einnehmen,
die anpassende Zuweisung der NUMA-Knoten umfasst:
Auswählen (S301) eines NUMA-Knotens mit einer überlasteten CPU-Auslastung als zu optimierenden Knoten;
Beurteilung (S302), ob es im NUMA-Cluster einen verfügbaren Knoten gibt, wobei der verfügbare Knoten ein Knoten ist, dessen CPU-Auslastung nach der Übernahme einer von dem zu optimierenden Knoten migrierten virtuellen Maschine nicht überlastet ist;
Migration (S303) einer virtuellen Maschine von dem zu optimierenden Knoten zu einem verfügbaren Knoten, sofern ein verfügbarer Knoten vorhanden ist, umfassend Migration einer virtuelle Maschine, die zu einem verfügbaren Knoten, der nicht die voreingestellte wichtige virtuelle Maschine hostet und die geringste CPU-Auslastung aufweist;
Beurteilen (S304), ob im NUMA-Cluster ein austauschbarer Knoten vorhanden ist, falls kein verfügbarer Knoten vorhanden ist, wobei der austauschbare Knoten ein Knoten ist, dessen CPU-Auslastung nach dem Austausch einer virtuellen Maschine mit dem zu optimierenden Knoten nicht überlastet ist; und
Austausch (S305) einer virtuellen Maschine zwischen dem zu optimierenden Knoten und dem austauschbaren Knoten, falls ein austauschbarer Knoten vorhanden ist, und
und falls jede der Vielzahl von NUMA-Knoten die voreingestellte wichtige virtuelle Maschine hostet, ist die auf den verfügbaren Knoten zu migrierende virtuelle Maschine die virtuelle Maschine, die nicht die voreingestellte wichtige virtuelle Maschine ist.

2. Verfahren zum Zuweisen von NUMA-Knoten für virtuelle Maschinen gemäß Anspruch 1, wobei das Bestimmen (S101) einer entsprechenden Anzahl von NUMA-Knoten für jede der Vielzahl von virtuellen Maschinen umfasst:
Bestimmen der Anzahl von NUMA-Knoten, die jeder der virtuellen Maschinen entspricht, auf der Grundlage einer Beziehung zwischen einer voreingestellten Anzahl von VCPUs der virtuellen Maschine und einer Anzahl von CPU-Kernen eines einzelnen Knotens.

3. Verfahren zur Zuweisung von NUMA-Knoten für virtuelle Maschinen gemäß Anspruch 2, wobei das Bestimmen der Anzahl von NUMA-Knoten, die jeder der virtuellen Maschinen entspricht, auf der Grundlage einer Beziehung zwischen einer voreingestellten Anzahl von VCPUs der virtuellen Maschine und einer Anzahl von CPU-Kernen eines einzelnen Knotens umfasst:
Prüfen, ob die voreingestellte Anzahl von VCPUs kleiner ist als die Gesamtzahl der CPU-Kerne des NUMA-Clusters, wobei die Gesamtzahl der CPU-Kerne das Produkt aus der Anzahl der CPU-Kerne eines einzelnen Knotens und der Gesamtzahl der Knoten ist;
Bestimmen einer Anzahl, die durch Aufrunden eines Verhältnisses der voreingestellten Anzahl von VCPUs zur Anzahl der CPU-Kerne eines einzelnen Knotens erhalten wird, als die Anzahl der NUMA-Knoten, die der virtuellen Maschine entsprechen, falls die voreingestellte Anzahl von VCPUs kleiner ist als die Gesamtzahl der CPU-Kerne; und
Bestimmen der Gesamtzahl der Knoten als die Anzahl der NUMA-Knoten, die der virtuellen Maschine entsprechen, in einem Fall, in dem die voreingestellte Anzahl von VCPUs nicht kleiner ist als die Gesamtzahl der CPU-Kerne.

4. Verfahren zum Zuweisen von NUMA-Knoten für virtuelle Maschinen gemäß Anspruch 1, wobei das anfängliche Zuweisen der entsprechenden Anzahl von NUMA-Knoten an die Vielzahl von virtuellen Maschinen jeweils umfasst:
Auswählen der entsprechenden Anzahl von NUMA-Knoten für jede der Vielzahl von virtuellen Maschinen; und
Konfigurieren der CPUs und lokalen Speicher der entsprechenden Anzahl von NUMA-Knoten, die von der entsprechenden virtuellen Maschine aufgerufen werden sollen.

5. Verfahren zum Zuweisen von NUMA-Knoten für virtuelle Maschinen gemäß Anspruch 4, wobei das Auswählen der entsprechenden Anzahl von NUMA-Knoten für jede der Vielzahl von virtuellen Maschinen umfasst:
Beurteilen (S201), ob eine Differenz zwischen der CPU-Auslastung eines NUMA-Knotens mit der niedrigsten CPU-Auslastung und der CPU-Auslastung anderer NUMA-Knoten größer ist als eine voreingestellte Differenz;
Zuweisen (S202) des NUMA-Knotens mit der geringsten CPU-Auslastung an die virtuelle Maschine, falls die Differenz größer ist als die voreingestellte Differenz;
Zuweisen (S203) eines NUMA-Knotens, der die geringste Anzahl an VCPUs hostet, an die virtuelle Maschine, sofern die Differenz nicht größer ist als die voreingestellte Differenz; und
Wiederholen (S204) des Schritts, bei dem beurteilt wird, ob eine Differenz zwischen der CPU-Auslastung eines NUMA-Knotens mit der geringsten CPU-Auslastung und der CPU-Auslastung anderer NUMA-Knoten größer als eine voreingestellte Differenz ist, sowie die nachfolgenden Schritte, bis die Anzahl der der virtuellen Maschine zugewiesenen NUMA-Knoten die entsprechende Anzahl erreicht.

6. Verfahren zur Zuweisung von NUMA-Knoten für virtuelle Maschinen gemäß Anspruch 1, wobei die Migration einer virtuellen Maschine von dem zu optimierenden Knoten zu dem verfügbaren Knoten umfasst:
die Migration einer virtuellen Maschine mit dem geringsten Speicherbedarf in dem zu optimierenden Knoten auf den verfügbaren Knoten, wobei die auf den verfügbaren Knoten migrierte virtuelle Maschine keine virtuelle Maschine umfasst, die auf allen der mehreren NUMA-Knoten gehostet wird.

7. Verfahren zur Zuweisung von NUMA-Knoten für virtuelle Maschinen gemäß einem der Ansprüche 1 bis 6, wobei die vorab festgelegte wichtige virtuelle Maschine in dem NUMA-Knoten eine höhere Gewichtung für CPU-Zeitscheiben aufweist als die anderen virtuellen Maschinen in dem NUMA-Knoten.

8. Verfahren zur Zuweisung von NUMA-Knoten für virtuelle Maschinen gemäß Anspruch 7, das ferner umfasst:
Bestimmen eines NUMA-Knotens, auf dem sich eine vorab als wichtig festgelegte virtuelle Maschine mit großem Seiten-Speicher befindet, als wichtiger Knoten als Reaktion auf die Erkennung der vorab als wichtig festgelegten virtuellen Maschine, die den großen Seiten-Speicher nutzt; und
Isolieren eines vorab festgelegten wichtigen Dienstes des NUMA-Clusters, sodass der vorab festgelegte wichtige Dienst auf anderen NUMA-Knoten als dem wichtigen Knoten ausgeführt wird.

9. Verfahren zum Zuweisen von NUMA-Knoten für virtuelle Maschinen gemäß Anspruch 1, wobei die vorab festgelegte wichtige virtuelle Maschine mindestens eine virtuelle Maschine, die bei der Nutzung von CPU-Zeitscheiben dominiert, und eine virtuelle Maschine, die einen Großseitenspeicher nutzt, umfasst.

10. Vorrichtung zum Zuweisen von NUMA-Knoten für virtuelle Maschinen, wobei die Vorrichtung umfasst:
ein Nummernbestimmungsmodul (401), das so konfiguriert ist, dass es für jede einer Vielzahl von virtuellen Maschinen eine entsprechende Anzahl von NUMA-Knoten bestimmt;
ein Modul (402) zur anfänglichen Zuweisung, das so konfiguriert ist, dass es den mehreren virtuellen Maschinen jeweils die entsprechenden Anzahlen von NUMA-Knoten anfänglich zuweist;
ein Lastüberwachungsmodul (403), das so konfiguriert ist, dass es die CPU-Auslastung jedes einzelnen NUMA-Knotens in einem NUMA-Cluster überwachet; und
ein Dispatch-Anpassungsmodul (404), das so konfiguriert ist, dass es die Aufgabenverteilung an die NUMA-Knoten anpasst, um die CPU-Auslastungen auszugleichen, falls die CPU-Auslastung eines NUMA-Knotens überlastet ist;
**dadurch gekennzeichnet, dass**:
ein Schwellenwert für die Überlastung der CPU-Auslastung eines NUMA-Knotens, auf dem sich eine voreingestellte wichtige virtuelle Maschine befindet, niedriger ist als der Schwellenwert für die Überlastung der CPU-Auslastung eines NUMA-Knotens, auf dem sich eine andere virtuelle Maschine als die voreingestellte wichtige virtuelle Maschine befindet,
wichtige virtuelle Maschinen sind virtuelle Maschinen, die gemäß Benutzereinstellungen zur Ausführung wichtiger Aufgaben konfiguriert sind, eine höhere Priorität haben und bei der Ressourcenaufrufung eine vorrangige Stellung einnehmen,
das Dispatch-Anpassungsmodul (404) ist so konfiguriert, dass es:
einen NUMA-Knoten mit einer überlasteten CPU-Auslastung als zu optimierenden Knoten auswählt;
beurteilet, ob es im NUMA-Cluster einen verfügbaren Knoten gibt, wobei der verfügbare Knoten ein Knoten ist, dessen CPU-Auslastung nach der Übernahme einer von dem zu optimierenden Knoten migrierten virtuellen Maschine nicht überlastet ist;
eine virtuelle Maschine vom zu optimierenden Knoten auf den verfügbaren Knoten migriert, falls ein verfügbarer Knoten vorhanden ist, umfassend die Migration einer virtuellen Maschine auf einen verfügbaren Knoten, der die voreingestellte wichtige virtuelle Maschine nicht hostet und die geringste CPU-Auslastung aufweist;
beurteilt, ob es im NUMA-Cluster einen austauschbaren Knoten gibt, falls kein verfügbarer Knoten vorhanden ist, wobei der austauschbare Knoten ein Knoten ist, dessen CPU-Auslastung nach dem Austausch einer virtuellen Maschine mit dem zu optimierenden Knoten nicht überlastet ist; und
eine virtuelle Maschine zwischen dem zu optimierenden Knoten und dem austauschbaren Knoten austauscht, sofern ein austauschbarer Knoten vorhanden ist, und
für den Fall, dass jede der Vielzahl von NUMA-Knoten die voreingestellte wichtige virtuelle Maschine hostet, ist die auf den aufnahmebereiten Knoten zu migrierende virtuelle Maschine die virtuelle Maschine, die nicht die voreingestellte wichtige virtuelle Maschine ist.

11. Elektronisches Gerät, umfassend:
einen Speicher (501), der so konfiguriert ist, dass er ein Computerprogramm speichert;
einen Prozessor (502), der so konfiguriert ist, dass er das Computerprogramm ausführt, um die Schritte des Verfahrens zur Zuweisung von NUMA-Knoten für virtuelle Maschinen gemäß einem der Ansprüche 1 bis 9 zu implementieren.

12. Ein computerlesbares Speichermedium, auf dem ein Computerprogramm gespeichert ist, das bei Ausführung durch einen Prozessor die Schritte des Verfahrens zur Zuweisung von NUMA-Knoten für virtuelle Maschinen gemäß einem der Ansprüche 1 bis 9 implementiert.

## Revendications

1. Procédé d'affectation de nœuds NUMA pour des machines virtuelles, le procédé comprenant les étapes consistant à :
déterminer (S101), pour chacune d'une pluralité de machines virtuelles, un nombre correspondant de nœuds NUMA ;
initialement allouer (S102) les nombres correspondants de nœuds NUMA à la pluralité de machines virtuelles respectivement ;
surveiller (S103) une charge CPU de chacun des nœuds NUMA dans un cluster NUMA ; et
ajuster (S104) une affectation des nœuds NUMA pour équilibrer les charges CPU dans un cas où la charge CPU d'un nœud NUMA est en surallocation ;
**caractérisé en ce que** :
un seuil de surallocation de charge CPU d'un nœud NUMA où réside une machine virtuelle importante prédéfinie est inférieur au seuil de surallocation de charge CPU d'un nœud NUMA où réside une machine virtuelle autre que la machine virtuelle importante prédéfinie,
des machines virtuelles importantes sont des machines virtuelles configurées selon des réglages utilisateur pour effectuer des tâches importantes, avoir une priorité plus élevée et avoir une position dominante dans un appel de ressources,
l'étape d'ajustement d'affectation des nœuds NUMA comprend de :
sélectionner (S301) un nœud NUMA avec une charge CPU en surallocation à titre de nœud à optimiser ;
juger (S302) s'il y a un nœud supportable dans le cluster NUMA, le nœud supportable étant un nœud dont la charge CPU n'est pas en surallocation après prise en charge d'une machine virtuelle migrée depuis le nœud à optimiser ;
migrer (S303) une machine virtuelle depuis le nœud à optimiser vers le nœud supportable, dans un cas où il y a un nœud supportable, y compris migrer une machine virtuelle vers un nœud supportable qui n'héberge pas la machine virtuelle importante prédéfinie et qui a une charge CPU la plus basse ;
juger (S304) s'il y a un nœud échangeable dans le cluster NUMA dans un cas où il n'y a pas de nœud supportable, le nœud échangeable étant un nœud dont la charge CPU n'est pas en surallocation après échange d'une machine virtuelle avec le nœud à optimiser ; et
échanger (S305) une machine virtuelle entre le nœud à optimiser et le nœud échangeable, dans un cas où il y a un échangeable, et
dans un cas où chacun de la pluralité de nœuds NUMA héberge la machine virtuelle importante prédéfinie, la machine virtuelle à migrer vers le nœud supportable est la machine virtuelle autre que la machine virtuelle importante prédéfinie.

2. Procédé d'affectation de nœuds NUMA pour des machines virtuelles selon la revendication 1, dans lequel l'étape consistant à déterminer (S101), pour chacune d'une pluralité de machines virtuelles, un nombre correspondant de nœuds NUMA comprend de :
déterminer le nombre de nœuds NUMA correspondant à chacune des machines virtuelles, sur la base d'une relation entre un nombre prédéfini de VCPU de la machine virtuelle et un nombre de cœurs CPU d'un nœud unique.

3. Procédé d'affectation de nœuds NUMA pour des machines virtuelles selon la revendication 2, dans lequel l'étape consistant à déterminer le nombre de nœuds NUMA correspondant à chacune des machines virtuelles, sur la base d'une relation entre un nombre prédéfini de VCPU de la machine virtuelle et un nombre de cœurs CPU d'un nœud unique, comprend de :
juger si le nombre prédéfini de VCPU est inférieur à un nombre total de cœurs CPU du cluster NUMA, le nombre total de cœurs CPU étant un produit du nombre de cœurs CPU d'un nœud unique et d'un nombre total de nœuds ;
déterminer un nombre, qui est obtenu en arrondissant vers le haut un rapport du nombre prédéfini de VCPU sur le nombre de cœurs CPU d'un nœud unique, comme étant le nombre de nœuds NUMA correspondant à la machine virtuelle, dans un cas où le nombre prédéfini de VCPU est inférieur au nombre total de cœurs CPU ; et
déterminer le nombre total de nœuds comme étant le nombre de nœuds NUMA correspondant à la machine virtuelle, dans un cas où le nombre prédéfini de VCPU n'est pas inférieur au nombre total de cœurs CPU.

4. Procédé d'affectation de NUMA pour des machines virtuelles selon la revendication 1, dans lequel l'étape consistant à initialement allouer les nombres correspondants de nœuds NUMA à la pluralité de machines virtuelles respectivement comprend de :
sélectionner le nombre correspondant de nœuds NUMA pour chacune de la pluralité de machines virtuelles ; et
configurer des CPU et des mémoires locales du nombre correspondant de nœuds NUMA à appeler via la machine virtuelle correspondante.

5. Procédé d'affectation de nœuds NUMA pour des machines virtuelles selon la revendication 4, dans lequel l'étape consistant à sélectionner le nombre correspondant de nœuds NUMA pour chacune de la pluralité des machines virtuelles comprend de :
juger (S201) si une différence entre la charge CPU d'un nœud NUMA avec une charge CPU la plus basse et la charge CPU d'autres nœuds NUMA est supérieure à une différence prédéfinie ;
allouer (S202) le nœud NUMA avec la charge CPU la plus basse à la machine virtuelle, dans un cas où la différence est supérieure à la différence prédéfinie ;
allouer (S203) un nœud NUMA qui héberge un moindre nombre de VCPU à la machine virtuelle, dans un cas où la différence n'est pas supérieure à la différence prédéfinie ; et
répéter (S204) l'étape consistant à juger si une différence entre la charge CPU d'un nœud NUMA avec une charge CPU la plus basse et la charge CPU d'autres nœuds NUMA est supérieure à une différence prédéfinie, et les étapes suivantes, jusqu'à ce que le nombre de nœuds NUMA alloués à la machine virtuelle atteigne le nombre correspondant.

6. Procédé d'affectation de nœuds NUMA pour des machines virtuelles selon la revendication 1, dans lequel l'étape consistant à migrer une machine virtuelle depuis le nœud à optimiser jusqu'au nœud supportable comprend de :
migrer une machine virtuelle avec une occupation de mémoire la plus petite dans le nœud à optimiser vers le nœud supportable, la machine virtuelle migrée vers le nœud supportable ne comprenant pas de machine virtuelle hébergée sur l'ensemble de la pluralité de nœuds NUMA.

7. Procédé d'affectation de nœuds NUMA pour des machines virtuelles selon l'une quelconque des revendications 1 à 6, dans lequel la machine virtuelle importante prédéfinie a un poids plus élevé pour des tranches de temps CPU dans le nœud NUMA que celui de la machine virtuelle autre que la machine virtuelle importante prédéfinie dans le nœud NUMA.

8. Procédé d'affectation de NUMA pour des machines virtuelles selon la revendication 7, comprenant en outre de :
déterminer un nœud NUMA où réside une machine virtuelle importante prédéfinie utilisant une mémoire à grandes pages comme nœud important en réponse à la détection de la machine virtuelle importante prédéfinie utilisant la mémoire à grandes pages ; et
isoler un service important prédéfini du cluster NUMA de telle sorte que le service important prédéfini est exécuté sur d'autres nœuds NUMA autres que le nœud important.

9. Procédé d'affectation de nœuds NUMA pour des machines virtuelles selon la revendication 1, dans lequel la machine virtuelle importante prédéfinie comprend l'une au moins d'une machine virtuelle dominant en utilisant des tranches de temps CPU et d'une machine virtuelle utilisant une mémoire à grandes pages.

10. Appareil d'affectation de nœuds NUMA pour des machines virtuelles, l'appareil comprenant :
un module de détermination de nombre (401), configuré pour déterminer, pour chacune d'une pluralité de machines virtuelles, un nombre correspondant de nœuds NUMA ;
un module d'allocation initiale (402), configuré pour initialement allouer les nombres correspondants de nœuds NUMA à la pluralité de machines virtuelles respectivement ;
un module de surveillance de charge (403), configuré pour surveiller une charge CPU de chacun des nœuds NUMA dans un cluster NUMA ; et
un module d'ajustement d'affectation (404), configuré pour ajuster une allocation des nœuds NUMA pour équilibrer les charges CPU dans un cas où la charge CPU d'un nœud NUMA est en surallocation ;
**caractérisé en ce que** :
un seuil de surallocation de charge CPU d'un nœud NUMA où réside une machine virtuelle importante prédéfinie est inférieur au seuil de surallocation de charge CPU d'un nœud NUMA où réside une machine virtuelle autre que la machine virtuelle importante prédéfinie,
des machines virtuelles importantes sont des machines virtuelles configurées selon des réglages utilisateur pour effectuer des tâches importantes, avoir une priorité plus élevée et avoir une position dominante dans un appel de ressources,
le module d'ajustement d'affectation (404) est configuré pour :
sélectionner un nœud NUMA avec une charge CPU en surallocation à titre de nœud à optimiser ;
juger s'il y a un nœud supportable dans le cluster NUMA, le nœud supportable étant un nœud dont la charge CPU n'est pas en surallocation après prise en charge d'une machine virtuelle migrée depuis le nœud à optimiser ;
migrer une machine virtuelle depuis le nœud à optimiser vers le nœud supportable, dans un cas où il y a un nœud supportable, y compris migrer une machine virtuelle vers un nœud supportable qui n'héberge pas la machine virtuelle importante prédéfinie et qui a une charge CPU la plus basse ;
juger s'il y a un nœud échangeable dans le cluster NUMA dans un cas où il n'y a pas de nœud supportable, le nœud échangeable étant un nœud dont la charge CPU n'est pas en surallocation après échange d'une machine virtuelle avec le nœud à optimiser ; et
échanger une machine virtuelle entre le nœud à optimiser et le nœud échangeable, dans un cas où il y a un échangeable, et
dans un cas où chacun de la pluralité de nœuds NUMA héberge la machine virtuelle importante prédéfinie, la machine virtuelle à migrer vers le nœud supportable est la machine virtuelle autre que la machine virtuelle importante prédéfinie.

11. Dispositif électronique comprenant :
une mémoire (501) configurée pour stocker un programme d'ordinateur ;
un processeur (502) configuré pour exécuter le programme d'ordinateur afin de mettre en œuvre les étapes du procédé d'affectation de nœuds NUMA pour des machines virtuelles selon l'une quelconque des revendications 1 à 9.

12. Support de stockage lisible par ordinateur ayant, stocké sur celui-ci, un programme d'ordinateur qui, quand il est exécuté par un processeur, met en œuvre les étapes du procédé d'affectation de nœuds NUMA pour des machines virtuelles selon l'une quelconque des revendications 1 à 9.
